# EUROPEAN PATENT SPECIFICATION

(11) **EP 3 945 771 B1**
(45) Date of publication and mention of the grant of the patent: **07.05.2025**
(21) Application number: 20714702.6
(22) Date of filing: 23.03.2020
(51) Int. Cl.: A01D 34/43, A01D 34/535, A01F 12/40

(54) **APPARATUS FOR WORKING THE SOIL AND OPERATOR MACHINE PROVIDED WITH SAID APPARATUS**
VORRICHTUNG ZUM BEARBEITEN DES BODENS UND MIT DIESER VORRICHTUNG VERSEHENE BEDIENERMASCHINE
APPAREIL DE TRAVAIL DU SOL ET MACHINE ÉQUIPÉE DUDIT APPAREIL

(30) Priority: 05.04.2019 IT 201900005260
(43) Date of publication of application: 09.02.2022
(73) Proprietor: KUBOTA GIANNI FERRARI S.R.L., 42046 Reggiolo (RE) (IT)
(72) Inventor: BERTAZZONI, Giuseppe, 42046 Reggiolo (RE) (IT); BERNINI, Matteo, 46024 Moglia (MN) (IT)
(74) Representative: Corradini, Corrado
(86) International application number: PCT/IB2020/052679
(87) International publication number: WO 2020/201895

(56) References cited:
- EP-A1- 1 647 179
- EP-A1- 3 326 449
- DE-U1- 202005 010 055
- GB-A- 2 494 206
- US-A1- 2012 017 559

## Description

### Field of the art

The present invention regards an apparatus for working the soil.

More precisely, the invention regards an apparatus suitable to be fixed to a multi-purpose operator machine or to an agricultural machine or to a lawn mower or the like.

### State of the art

Known are agricultural machines, for example small tractors and large lawn mowers etc., fixed to which is an apparatus for working the soil for work operations such as for example mowing the lawn, cutting and anything else.

Such apparatus generally comprise a shaft or rotor, which is fixed to the agricultural machine and connected to a special actuator suitable to drive it in rotation around a rotation axis thereof, and a plurality of work tools which are removably associated to the rotor for the aforementioned work operations and which are oscillating with respect to the rotor around a rotation axis parallel to the rotation axis of the rotor.

For example, such tools can be the so-called blades or cutters in case of mowing and cutting operations.

In particular, in the apparatus of the prior art, said work tools are hinged to the shaft or rotor by means of a pivot pin inserted into a reception seat defined by two brackets specially obtained on the rotor, provided with mutually coaxial through slots, and fixed to said brackets at the opposite ends thereof by means of washers and fixing bolts.

Documents EP 1 647 179,

US2012017559 and GB2494206 disclose examples of such tools.

Such tools periodically require, within a more or less short period depending on the use, maintenance so as to make the working unit effective.

Furthermore, each time there arises the need to pass from one operation for working the soil to another, the tools must be replaced with other specific ones for the subsequent operation to be carried out.

To this end, the tools must thus be assembled and disassembled on the rotor each time, and, considering the high number of work tools fixed to the shaft or rotor, these disassembly and re-assembly operations are particularly difficult and require long times, in that they require unscrewing and subsequently screwing all bolts.

Thus, a need felt in the industry lies in quickening the operations for assembling and disassembling the work tools, as well as making said operations easier and simpler.

An object of the present invention is to meet said needs felt in the industry.

Another object is that of attaining such object through a solution that is simple, rational and relatively inexpensive.

These and other objects are attained by the characteristics of the invention, as outlined in the independent claim 1.

The dependent claims outline preferred and/or particularly advantageous aspects of the invention.

### Description of the invention

In particular, the invention provides an apparatus for working the soil, comprising a rotor, provided with a rotation axis thereof, and a work tool, rotatably associated to the rotor by means of a hinge, which comprises at least one pivot pin of the work tool and a pair of brackets, said pin being associated to the brackets by means of a magnetic system.

This solution allows providing an apparatus for working the soil where the tool is rotatably associated to the rotor by means of a pivot pin, in which the work tool assembly and disassembly operations are considerably easier with respect to the apparatus of the prior art, as well as much quicker, in that the pivot pin is fixed to the rotor in a particularly simple and quick manner and in particular without using screws and bolts.

Another aspect of the invention provides for that each bracket can be provided with a through slot for receiving the pivot pin.

Thanks to such solution, the pin is inserted into the through slot of said brackets and then associated to the rotor by means of a solution that is particularly simple, inexpensive and intuitive.

A further aspect of the invention provides for that at least one of said brackets may comprise a portion made of ferromagnetic material, and that the magnetic system may comprise a permanent magnet fixed to the pivot pin suitable to interact with the portion made of ferromagnetic material of the bracket.

This solution allows providing a particularly solid removable coupling between the pivot pin and the brackets.

Still, another aspect of the invention provides for that one of the brackets may comprise a seat for receiving the permanent magnet of the pivot pin.

Thanks to such solution, the permanent magnet may be inserted into said reception seat so as to be fully contained (or at most slightly projecting) therein, and thus effectively protected against possible collisions with foreign bodies during the operations for working the soil.

Another aspect of the invention provides for that the axis of the pivot pin can be parallel to the rotation axis of the rotor.

Thanks to such solution, the architecture of the apparatus for working the soil is particularly rational and effective.

Still, another aspect of the invention provides for that the pivot pin may have two radial grooves with full circumferential extension, and that each groove can be arranged at the through slot of the respective bracket.

Thanks to such solution, the grooves are suitable to embrace, due to the weight force when the apparatus is not operative or due to the centrifugal force in the operative step, the profile obtained by the through slots of the brackets with the brackets, and this allows preventing the axial movements of the pivot pin.

Another aspect of the invention provides for that the work tool can comprise a Y- flail.

Thanks to such solution, the apparatus for working the soil may be designated for mowing or shearing operations.

A further aspect of the invention provides for that the work tool may comprise a paddle flail.

Thanks to such solution, the apparatus for working the soil may be designated for lawn mowing and shrub cutting operations.

Still, another aspect of the invention provides for that the work tool can comprise a verticut flail.

Thanks to such solution, the apparatus for working the soil can be provided with a work tool designated for function of aerating the soil.

Still, a further aspect of the invention provides for that each bracket may comprise two juxtaposed fins.

Thanks to such solution, the permanent magnet may be magnetically anchored to the bracket and it is laterally protected against collisions with foreign bodies by means of fins.

The invention further provides an operator machine comprising:
- a support framework,
- a plurality of wheels for resting against the soil,
- an apparatus for working the soil, as described above.

Thanks to such solution, the invention provides an operator machine provided with an apparatus for working the soil as described above and with the advantages relating thereto.

### Brief description of the drawings

Further characteristics and advantages of the invention will be apparent from reading the following description - provided by way of non-limiting example - with reference to the figures illustrated in the attached drawings.
Figure 1 is a perspective view of an embodiment of the apparatus for working the soil according to the invention.
Figure 2 is an enlarged view of a portion of figure 1.
Figure 3 is a cross-sectional view with respect to a longitudinal median plane of the apparatus of figure 1.
Figure 4 is an enlarged view of a portion of figure 3.
Figure 5 is a view of another embodiment of the apparatus for working the soil according to the invention.
Figure 6 is an enlarged view of a portion of figure 5.
Figure 7 is a cross-sectional view with respect to a longitudinal median plane of the apparatus of figure 5.
Figure 8 is an enlarged view of a portion of figure 7.
Figure 9 is a partially transparent view of an operator machine provided with an apparatus for working the soil according to the invention.

### Best embodiment of the invention

With particular reference to such figures, an apparatus for working the soil, for example for lawn mowing and cutting is indicated in its entirety with 10.

The apparatus 10 first and foremost comprises a rotor 15, provided with its own rotation axis A, suitable to be removably connected to an operator machine 100, or to an agricultural machine or a lawn mower and the like, and connected to a suitable actuator suitable to drive it in rotation around said rotation axis A.

The rotor 15 substantially is a rigid bar, for example with circular cross-section, and it provided with an outer jacket, for example cylindrical, exposed.

The apparatus 10 then comprises a work tool 45, associated to the rotor 15.

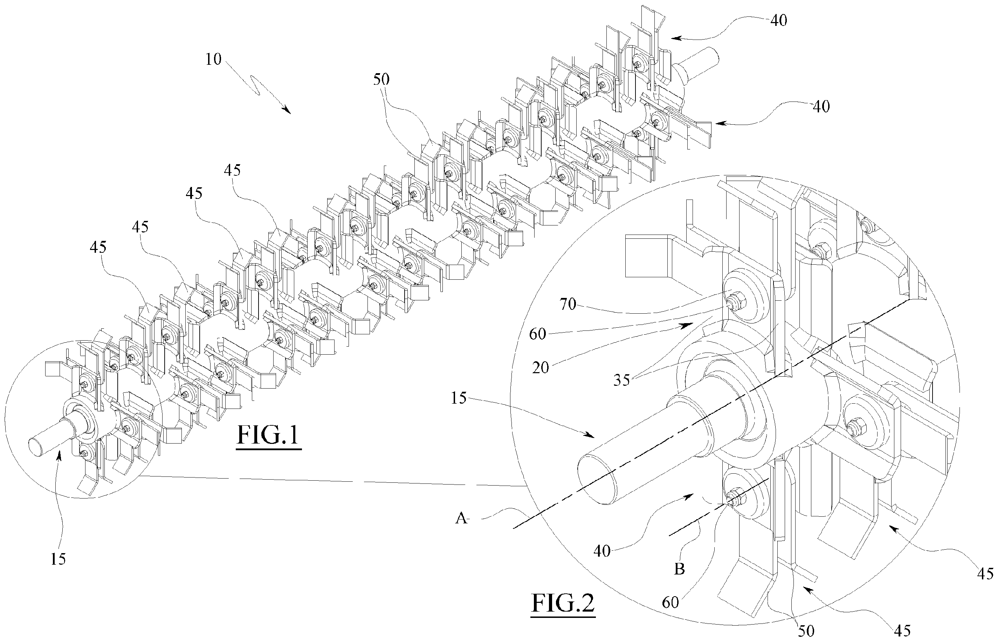

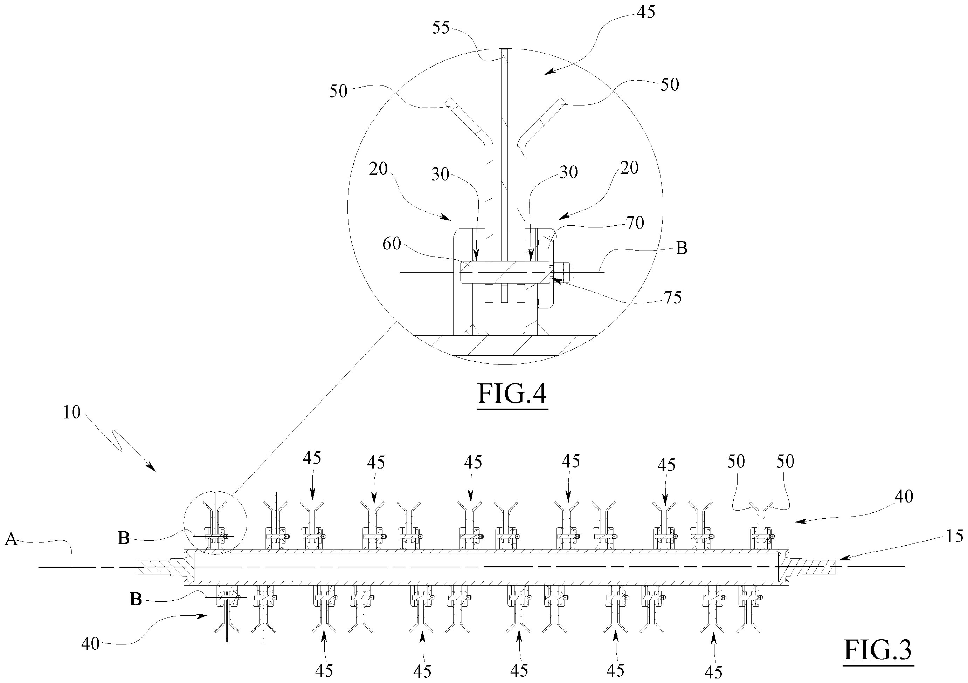

As observable in figure 1-4, the work tool 45 may comprise a mowing and/or cutting tool, for example a so-called Y-flail.

In such case, the work tool 45 comprises two identical blades 50 which define said Y-flail, each provided with a first portion and with a second portion transversal to the first, and the blades 50 are arranged symmetrically with respect to each other, i.e. the second portions of the blades 50 are arranged so as to be divergent with respect to each other.

Alternatively, the work tool 45 may comprise a verticut flail 55, defined by a blade for example substantially straight, with the function of aerating the soil.

For example, it is also possible to provide for that the work tool 45 may comprise said Y-flail cutter and said verticut flail 55, and that the verticut flail 55 be interposed between the blades 50 of the Y-flail and unconstrained therefrom.

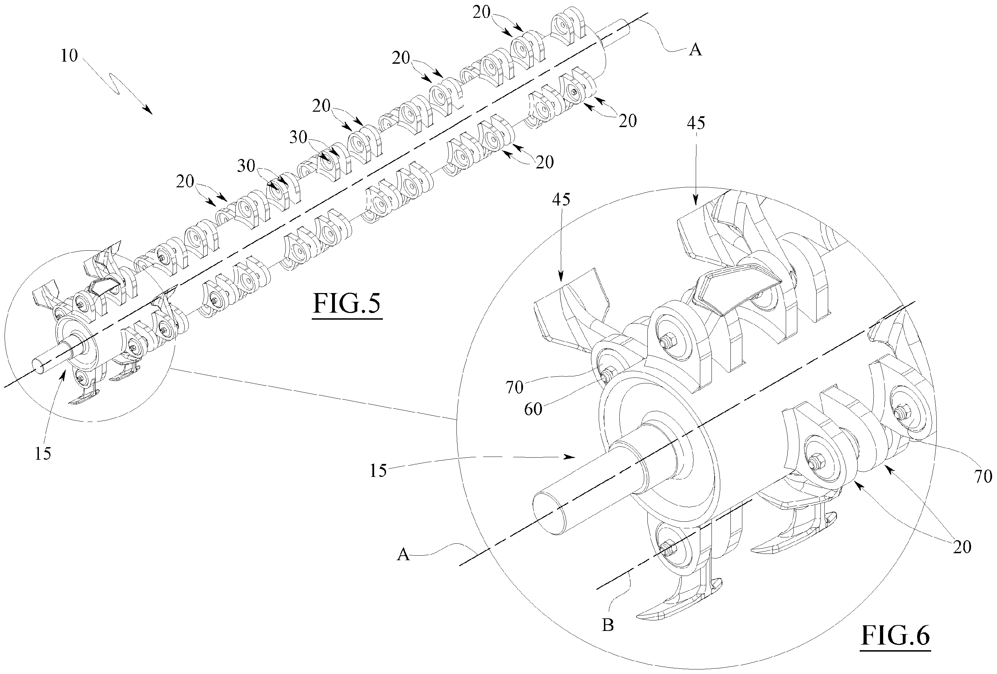

Alternatively, as observable in figure 5-6, the tool may comprise a so-called paddle flail or shovel-like cutter.

More generally, the work tool 45 may comprise any tool suitable to be associated to the rotor 15 and configured to carry out any operation for working the soil.

In particular, the work tool 45 is rotatably associated to the rotor 15 by means of a hinge. The hinge comprises a pair of brackets 20, rigid and for example made of metallic material, each provided with a through slot 30.

The brackets 20 are mutually parallel and spaced along a direction parallel to the rotation axis A of the rotor 15 so that defined between the two is an interspace, and the through slots 30 of the brackets 20 of the pair of brackets 20 are mutually coaxial.

According to a variant of the invention, the brackets 20 can be made of a monolithic body, i.e. the brackets 20 can be obtained as a single body, i.e. They can be obtained by means of a single process for working a rigid material for example metallic.

Said brackets 20 extend radially with respect to the rotor 15 and project cantilevered from the outer jacket of the rotor 15.

In particular, said brackets 20, are rigidly fixed, for example welded, to the rotor 15. Preferably, each bracket 20 comprises a through slot 30 provided with a central axis parallel to the rotation axis A of the rotor 15.

According to an embodiment of the invention, illustrated in figures 1 and 2, each bracket 20 may comprise two rigid fins 35, juxtaposed and mutually transversal, which extend from juxtaposed ends of the bracket 20 transversely thereto, defining a substantially C-shaped structure therewith.

More precisely, as observable in such figures 1-2, the brackets 20 are arranged symmetrically with respect to symmetry plane parallel to the brackets 20.

In detail, at least one bracket 20 of the pair of brackets 20 has at least one portion made of ferromagnetic material.

Preferably, at least one bracket 20 is entirely made of ferromagnetic material.

In the example, both brackets 20 are made of ferromagnetic material.

The hinge then comprises at least one pivot pin 60 through which the work tool 45 is rotatably associated to the rotor 15, around a hinge axis B, preferably a hinge axis B parallel (and eccentric) to the rotation axis A of the rotor 15.

More precisely, the work tool 45 has a through hole, for example with central axis parallel to the rotation axis A of the rotor 15, and it is suitable to be received (at least partly, with the first portion) in the interspace defined between the brackets 20, and arranged with the through hole coaxial to the through slots 30 of the brackets 20.

The through hole of the work tool 45 and the through slots 30 of the brackets 20 thus define a seat for receiving said pivot pin 60.

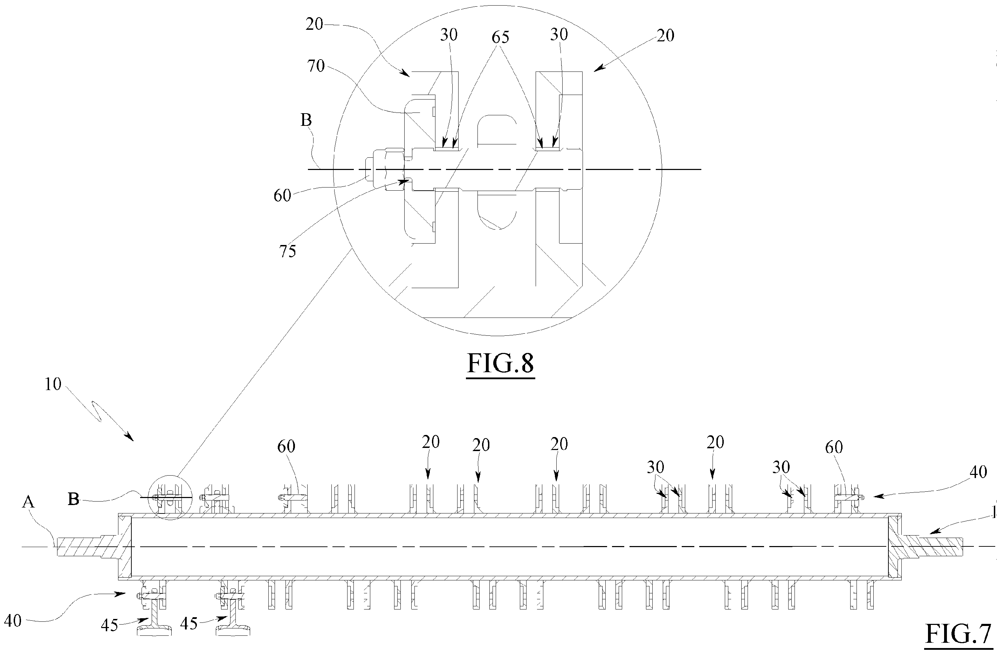

In particular, as observable in figure 8, said pivot pin 60 may, in some embodiments, have two radial grooves 65 with full circumferential extension, each having an extension along a direction parallel to the hinge axis B of the work tool 45, equal to (or at most slightly greater than) to an extension of each bracket 20 along said direction.

The pivot pin 60 is thus inserted into the reception seat defined by the through hole of the work tool 45 and by the through slots 30 of the brackets 20 so that each groove 65 is arranged at a respective through slot 30 of a bracket 20 of the pair of brackets 20.

Each groove 30 is thus pushed, by means of the weight force in the inoperative step of the work apparatus 10 or by means of centrifugal force in the operative step of the work apparatus 10, embracing - on three sides - the profile defined by the through slot 30 of the respective bracket 20 with the respective bracket 20 itself.

Thus, this allows preventing (or reducing in any case) the axial movements (along the hinge axis B) of the pivot pin 60 in the reception seat.

The pivot pin 60 is rigid and, for example, made of ferromagnetic material.

Preferably, the pivot pin is made of iron or steel.

Said pivot pin 60 is associated to the brackets 20, or to the rotor 15, by means of a magnetic system.

More precisely, the pivot pin 60 is removably fixed to the brackets 20 of the pair of brackets by means of said magnetic system.

The magnetic system comprises a permanent magnet 70, fixed to the pivot pin 60.

For example, as observable in figure 2, said permanent magnet 70 may be substantially disc-shaped.

In particular, the permanent magnet 70 may have a through cavity 75 comprising a first cylindrical portion and a second cylindrical portion with smaller diameter with respect to the diameter of the first cylindrical portion, and the pivot pin 60 has a first cylindrical section with diameter substantially equal to (or at most slightly smaller than) the diameter of the first cylindrical portion of the through cavity 75, and a second cylindrical portion with diameter substantially equal to (or at most slightly smaller) to the diameter of the second portion of the through cavity 75.

The pivot pin 60 is thus inserted into the through cavity 75 obtained in the permanent magnet 70, so that the first cylindrical section of the pivot pin 60 is in abutment with a bottom of the first cylindrical portion of the through cavity 75, and that the second cylindrical section of the pivot pin 60 fully traverses and projects beyond the second cylindrical portion of the through cavity 75 of the permanent magnet 70.

The pivot pin 60 is thus fixed in position, for example by means of a threaded bolt screwed on a corresponding threading obtained on a portion of the second cylindrical section of the pivot pin 60 projecting beyond the through cavity 75 of the permanent magnet 70.

The pivot pin 60 is thus fixed to the permanent magnet 70, without possibility of slipping off axially.

It cannot be ruled out that, in alternative embodiments, the pivot pin 60 and the permanent magnet 70 can be made of an integral body, i.e. that the permanent magnet 70 and the pivot pin 60 can be made of a single body by means of a single work operation of permanent magnet material.

The permanent magnet 70 is thus suitable to interact with the portion made of ferromagnetic material of the bracket 20 of the pair of brackets 20, i.e. the permanent magnet is magnetically anchored to the bracket 20 at least partially made of ferromagnetic material. In the example, the permanent magnet 70 is magnetically anchored to said bracket 20, for example at a face of the bracket distal from the other bracket 20 of the pair of brackets 20, with the pivot pin 60 inserted into the reception seat obtained by the through hole of the work tool 45 and by the through slots 30 of the brackets 20 of the pair of brackets 20. Thus, this allows facilitating and considerably quickening the operations for fixing the pivot pin 60 when there arises the need to assemble the work tool 45; as a matter of fact, it is sufficient to insert the pivot pin 60 into the reception seat and magnetically anchor the permanent magnet 70 to said bracket 20 at least partially made of ferromagnetic material. More preferably, the permanent magnet 70 is magnetically anchored to said bracket 20, at said face distal from the other bracket 20 of the pair of brackets 20, and the pivot pin 60 projects axially (along the hinge axis B) beyond the other bracket 20 of the pair of brackets 20.

Thus, this allows facilitating the operations for removing the pivot pin 60 whenever there arises the need to disassemble the work tool 45 for maintenance; as a matter of fact, simply acting with a with an axial force (along the hinge axis B) on said portion of the pivot pin 60 projecting beyond the bracket 20 without the permanent magnet 70 allows obtaining the de-anchoring the permanent magnet 70 from the bracket 20 to which it is anchored and the removal of the pivot pin 60 from the reception seat obtained by the through hole of the work tool 45 and by the through slots 30 of the brackets 20.

In particular, according to an embodiment of the invention visible in figures 6-8, the permanent magnet 70 can be inserted, substantially fittingly, into a seat specially obtained in the bracket 20 to which it is magnetically anchored, for example at said face of the bracket 20 distal from the bracket 20 of the pair of brackets 20.

Preferably, the permanent magnet 70 is inserted into said seat so as to be fully contained (or at most slightly projecting) into the seat, i.e. Substantially so as not to project beyond the seat and thus beyond the bracket 20 to which it is magnetically anchored.

According to an alternative embodiment of the invention 2, when the bracket 20 comprises the fins 35, the permanent magnet 70 can be magnetically anchored to the bracket 20, and in particular so as to be fully contained in the volume delimited by the bracket 20 and by the fins 35.

In both cases, the permanent magnet 70 is thus protected against possible collisions with foreign bodies during the various work operations carried out by the apparatus 10.

It still cannot be ruled out that even should the bracket 20 comprise the fins 35, the permanent magnet 70 can still be inserted into a special seat obtained in the bracket 20 at least partially made of ferromagnetic material.

Preferably, the apparatus 10 comprises a plurality of work tools 45 each of which is rotatably associated to the rotor 15 by means of a respective hinge 30,60.

For example, the apparatus 10 has a series 40 of hinges 30,60 comprising a plurality of hinges, in which the pairs of brackets 20 of the plurality of hinges are aligned and spaced one from the other along said direction parallel to the rotation axis A of the rotor 15.

Alternatively, the work apparatus 10 may comprise a series 40 of hinges 30, 60 comprising a plurality of hinges 30,60, in which the pairs of brackets 20 of the hinges are spaced one from the other and arranged on the outer jacket of the rotor 15 along a helical path, and said helical path extends along the cylindrical jacket of the rotor 15 substantially over the entire axial extension (along the rotation axis A) thereof.

Even more preferably, the apparatus 10 has a plurality of series 40 of hinges 30,60, preferably more than two series 40 of hinges 30,60, each series 40 consisting of a plurality of hinges 30,60 whose pairs of brackets 20 are aligned and spaced one from the other along said direction parallel to the rotation axis A of the rotor 15.

Said series 40 of the plurality of series 40 are spaced one from the other along the circumferential extension of the outer jacket of the rotor 15.

For example, said series 40 of the plurality of series 40 are mutually parallel and arranged at the same distance one from the other along said circumferential extension of the outer jacket of the rotor 15.

In other words, said series 40 are spaced one from the other by circle arcs of the same length along the circumferential extension of the outer jacket of the rotor 15.

As mentioned above, the apparatus 10 is suitable to be associated to an operator machine 100 for carrying out the aforementioned operations for working the soil.

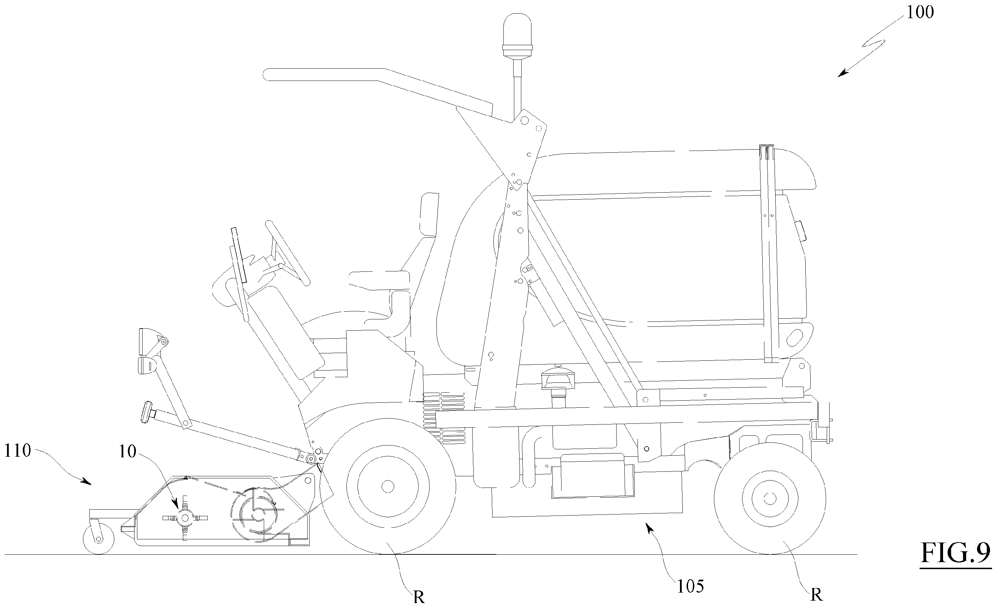

For example, as illustrated in figure 9, the work tool 45 can be a cutting tool and the operator machine 100 can be a self-propelled operator machine of the type suitable to be guided by a user seated on board.

The operator machine 100 comprises a support framework 105, installed on which is a plurality of wheels R for resting against the soil, and present in the front part of the support framework 105 is a driving station.

Furthermore, connected to the support framework 105 is a so-called cutting apparatus 110.

The cutting apparatus 110 comprises a guard provided with two juxtaposed lateral sides rotatably associated to which is the apparatus 10, and an actuator (not illustrated) suitable to drive the rotor 15 of the apparatus 10 for working the soil in rotation around the rotation axis A thereof.

The invention thus conceived is susceptible to numerous modifications and variants all falling within the inventive concept.

In addition, all details can be replaced by other technically equivalent elements.

Basically, the materials used as well as the shapes and contingent dimensions, may vary according to the needs without departing from the scope of protection of the claims that follow.

## Claims

1. An apparatus (10) for working the soil, comprising:
- a rotor (15), provided with an own rotation axis (A),
- a work tool (45), rotatably associated to the rotor (15) by means of a hinge,
**characterised in that**
- the hinge comprises at least one pivot pin (60) of the work tool (45) and a pair of brackets (20), said pivot pin being associated to the brackets (20) by means of a magnetic system (70).

2. An apparatus (10) according to claim 1, wherein each bracket (20) is provided with a through slot (30) for receiving the pivot pin (60).

3. An apparatus (10) according to claim 1, wherein at least one of said brackets (20) comprises a portion made of ferromagnetic material, and the magnetic system comprises a permanent magnet (70) fixed to the pivot pin (60) and suitable to interact with the portion made of ferromagnetic material of the bracket (20).

4. An apparatus (10) according to claim 3, wherein one of the brackets (20) comprises a seat for receiving the permanent magnet (70) of the pivot pin (60).

5. An apparatus (10) according to claim 1, wherein the axis of the pivot pin (60) is parallel to the rotation axis (A) of the rotor (15).

6. An apparatus (10) according to claim 2, wherein the pivot pin (60) has two radial grooves (65) with full circumferential extension, each arranged at the through slot (30) of the respective bracket (20).

7. An apparatus according to claim 1, wherein each bracket (20) has two juxtaposed fins (35).

8. An apparatus (10) according to claim 1, wherein the work tool (45) comprises a Y-flail.

9. An apparatus (10) according to claim 1, wherein the work tool (45) comprises a paddle flail.

10. An apparatus (10) according to claim 1, wherein the work tool (45) comprises a verticut flail (55).

11. An operator machine (100) comprising:
- a support framework (105),
- a plurality of wheels (R) for resting against the ground associated to the support framework (105), and
- an apparatus (10) for working the soil according to claim 1.

## Patentansprüche

1. Vorrichtung (10) zur Bodenbearbeitung, umfassend:
- einen Rotor (15), der mit einer eigenen Drehachse (A) versehen ist,
- ein Arbeitswerkzeug (45), das mittels eines Gelenks drehbar mit dem Rotor (15) assoziiert ist, **dadurch gekennzeichnet, dass**
- das Scharnier mindestens einen Drehzapfen (60) des Arbeitswerkzeugs (45) und ein Paar Halterungen (20) umfasst, wobei der Drehzapfen mittels eines Magnetsystems (70) mit den Halterungen (20) assoziiert ist.

2. Vorrichtung (10) nach Anspruch 1, wobei jede Halterungen (20) mit einem durchgehenden Schlitz (30) zum Aufnehmen des Drehzapfens (60) versehen ist.

3. Vorrichtung (10) nach Anspruch 1, wobei mindestens eine der Halterungen (20) einen aus ferromagnetischem Material gefertigten Abschnitt umfasst und das Magnetsystem einen Permanentmagneten (70) umfasst, der an dem Drehzapfen (60) befestigt und geeignet ist, mit dem Abschnitt aus ferromagnetischem Material der Halterung (20) zusammenzuwirken.

4. Vorrichtung (10) nach Anspruch 3, wobei eine der Halterungen (20) einen Sitz zum Aufnehmen des Permanentmagneten (70) des Drehzapfens (60) umfasst.

5. Vorrichtung (10) nach Anspruch 1, wobei die Achse des Drehzapfens (60) parallel zu der Drehachse (A) des Rotors (15) ist.

6. Vorrichtung (10) nach Anspruch 2, wobei der Drehzapfen (60) zwei radiale Nuten (65) mit voller Umfangserstreckung aufweist, die jeweils an dem durchgehenden Schlitz (30) der jeweiligen Halterung (20) angeordnet sind.

7. Vorrichtung nach Anspruch 1, wobei jede Halterung (20) zwei nebeneinander liegende Rippen (35) aufweist.

8. Vorrichtung (10) nach Anspruch 1, wobei das Arbeitswerkzeug (45) einen Y-Schlegel umfasst.

9. Vorrichtung (10) nach Anspruch 1, wobei das Arbeitswerkzeug (45) einen Paddelschlegel umfasst.

10. Vorrichtung (10) nach Anspruch 1, wobei das Arbeitswerkzeug (45) einen Verticut-Schlegel (55) umfasst.

11. Bedienermaschine (100), umfassend:
- einen Tragrahmen (105),
- eine Vielzahl von Rädern (R) zum Abstützen auf dem Boden, die mit dem Tragrahmen (105) assoziiert sind, und
- eine Vorrichtung (10) zur Bodenbearbeitung nach Anspruch 1.

## Revendications

1. Appareil (10) destiné à la préparation du sol, comprenant :
- un rotor (15), doté d'un axe de rotation propre (A),
- un outil de travail (45), associé de manière rotative au rotor (15) au moyen d'une charnière,
**caractérisé en ce que**
- la charnière comprend au moins un axe de pivotement (60) de l'outil de travail (45) et une paire de supports (20), ledit axe de pivotement étant associé aux supports (20) au moyen d'un système magnétique (70).

2. Appareil (10) selon la revendication 1, dans lequel chaque support (20) est doté d'une fente débouchante (30) pour recevoir l'axe de pivotement (60).

3. Appareil (10) selon la revendication 1, dans lequel au moins l'un des supports (20) comprend une partie en matériau ferromagnétique, et le système magnétique comprend un aimant permanent (70) fixé à l'axe de pivotement (60) et apte à interagir avec la partie en matériau ferromagnétique du support (20).

4. Appareil (10) selon la revendication 3, dans lequel l'un des supports (20) comprend un siège permettant de recevoir l'aimant permanent (70) de l'axe de pivotement (60).

5. Appareil (10) selon la revendication 1, dans lequel l'axe de l'axe de pivotement (60) est parallèle à l'axe de rotation (A) du rotor (15).

6. Appareil (10) selon la revendication 2, dans lequel l'axe de pivotement (60) comporte deux rainures radiales (65) avec une extension circonférentielle complète, chacune disposée au niveau de la fente débouchante (30) du support respectif (20).

7. Appareil selon la revendication 1, dans lequel chaque support (20) comporte deux ailettes juxtaposées (35).

8. Appareil (10) selon la revendication 1, dans lequel l'outil de travail (45) comprend un fléau en Y.

9. Appareil (10) selon la revendication 1, dans lequel l'outil de travail (45) comprend un fléau palette.

10. Dispositif (10) selon la revendication 1, dans lequel l'outil de travail (45) comprend un fléau verticut (55).

11. Machine d'opérateur (100) comprenant :
- un cadre de support (105),
- une pluralité de roues (R) permettant de s'appuyer au sol associées au cadre de support (105), et
- un appareil (10) destiné à la préparation du sol selon la revendication 1.
